# EUROPÄISCHE PATENTSCHRIFT

(11) **EP 2 431 766 B1**
(45) Veröffentlichungstag und Bekanntmachung des Hinweises auf die Patenterteilung: **23.01.2013**
(21) Anmeldenummer: 10010083.3
(22) Anmeldetag: 21.09.2010
(51) Int. Cl.: G01S 17/42, G01S 7/497, G01S 7/483

(54) **Optischer Scanner mit Verschmutzungsüberwachung**
Optical scanner with soiling detection
Scanner optique avec détection de salissures

(43) Veröffentlichungstag der Anmeldung: 21.03.2012
(73) Patentinhaber: SICK AG, 79183 Waldkirch/Breisgau (DE)
(72) Erfinder: Mack, Stefan, Dr., 79104 Freiburg (DE); Sigmund, Jörg, 79098 Freiburg (DE)
(74) Vertreter: Manitz, Finsterwald & Partner GbR

(56) Entgegenhaltungen:
- DE-A1-102008 032 216

## Beschreibung

Die vorliegende Erfindung betrifft einen optischen Scanner nach dem Oberbegriff des Anspruchs 1 sowie ein Verfahren zur Abschätzung eines Verunreinigungsgrades einer Frontscheibe eines optischen Scanners.

Ein solcher Scanner weist üblicherweise eine Frontscheibe auf, die im Strahlengang zwischen der Ablenkeinheit des Scanners und der zu erfassenden Umgebung angeordnet ist.

Bei optischen Scannern ist es bekannt, zur Verunreinigungsmessung eine optische Transmissionsmessung mehrerer Bereiche der Frontscheibe durchzuführen. Hierzu werden zusätzliche LEDs verwendet, die Licht aussenden, das die Frontscheibe durchstrahlt und von einer Fotodiode detektiert wird. Eine Verunreinigung der Frontscheibe kann durch Überwachung des Fotodiodenstroms detektiert werden. Die Frontscheibe ist hierbei gegenüber einer Senderichtung des Scanners schräg gestellt, damit das Licht der LED die Frontscheibe durchstrahlen und von der unterhalb der LED in einem Gehäuse des Scanners angeordneten Fotodiode detektiert werden kann. Dies führt zu einer Frontscheibe in Form eines Kegelstumpfmantels, wobei durch die Verbreiterung des Kegelstumpfmantels zusätzlicher Platzbedarf entsteht.

Es ist die Aufgabe der Erfindung, einen optischen Scanner zu schaffen, bei dem eine Abschätzung eines Verunreinigungsgrads der Frontscheibe mit verringertem konstruktiven Aufwand möglich ist, sowie ein Verfahren zur Abschätzung eines Verunreinigungsgrades anzugeben, das mit verringertem Aufwand durchgeführt werden kann.

Zur Lösung der Aufgabe ist ein optischer Scanner mit den Merkmalen des Anspruchs 1 vorgesehen.

Der erfindungsgemäße optische Scanner umfasst eine Sendeeinheit zur Aussendung von Sendestrahlungsbündeln in einen Erfassungsbereich, eine Ablenkeinheit, um während eines Scans Sendestrahlungsbündel in verschiedenen in einer Scanrichtung aufeinander folgenden Richtungen in den Erfassungsbereich zu lenken, eine Empfangseinheit zum Empfangen von aus dem Erfassungsbereich zurückgeworfener Strahlung von Sendestrahlungsbündeln, eine Auswerteeinheit zum Auswerten der von der Empfangseinheit empfangenen Strahlung und eine für die Sendestrahlungsbündel durchlässige, im Strahlengang zwischen der Ablenkeinheit und der zu erfassenden Umgebung angeordnete Frontscheibe. Erfindungsgemäß weist der optische Scanner eine Frontscheibe mit Bereichen hoher Verunreinigungsempfindlichkeit und Bereichen geringer Verunreinigungsempfindlichkeit auf, wobei diese Bereiche derart ausgestaltet sind, dass eine Verunreinigungseinwirkung auf die Frontscheibe in einem Bereich hoher Verunreinigungsempfindlichkeit eine Erhöhung der von der Frontscheibe zurückgeworfenen Strahlungsmenge eines Sendestrahlungsbündels um einen größeren absoluten Betrag bewirkt als eine Verunreinigungseinwirkung in einem Bereich geringer Verunreinigungsempfindlichkeit. Außerdem ist die Auswerteeinheit ausgebildet, um für die Sendestrahlungsbündel jeweils einen Frontscheibenrückstrahlungswert zu ermitteln, der von der durch die Empfangseinheit von dem Sendestrahlungsbündel in einem Frontscheibenzeitintervall empfangenen Strahlungsmenge abhängt. Dabei entspricht das Frontscheibenzeitintervall dem Zeitintervall, in dem eine von der Frontscheibe zurückgeworfene Strahlung des Sendestrahlungsbündels an der Empfangseinheit erwartet wird. Die Auswerteeinheit ist außerdem ausgestaltet, um zur Abschätzung eines Verunreinigungsgrads der Frontscheibe wenigstens einen Frontscheibenrückstrahlungswert, der einem von einem Bereich hoher Verunreinigungsempfindlichkeit der Frontscheibe zurückgeworfenen Sendestrahlungsbündel zugeordnet ist, mit wenigstens einem Frontscheibenrückstrahlungswert zu vergleichen, der einem von einem Bereich geringer Verunreinigungsempfindlichkeit der Frontscheibe zurückgeworfenen Sendestrahlungsbündel zugeordnet ist.

Das Frontscheibenzeitintervall hängt von der zeitlichen Ausdehnung des Sendestrahlungsbündels ab. Zum Beispiel kann bei Verwendung eines gepulsten Lasers als Strahlungsquelle die zeitliche Ausdehnung eines Sendepulses ca. 4 ns betragen. Das Frontscheibenzeitintervall kann dann ebenfalls etwa 4 ns breit sein, wobei der Beginn des Frontscheibenzeitintervalls in Bezug auf den Beginn der Aussendung des Sendestrahlungsbündels um die Dauer der Lichtlaufzeit des Sendestrahlungsbündels von der Sendeeinheit hin zur Frontscheibe und zurück zur Empfangseinheit verzögert ist, um möglichst die gesamte von der Frontscheibe zurückgeworfene Strahlung des Sendestrahlungsbündels zu verwerten. Wenn zum Beispiel die über das gesamte Frontscheibenzeitintervall empfangene Strahlung in den Frontscheibenrückstrahlungswert eingeht, wird der Einfluss von Rauschen auf die Auswertung verringert, sodass eine robuste Auswertung möglich ist, selbst wenn die Detektionsempfindlichkeit des optischen Scanners in der Ebene der Frontscheibe gering ist.

Die zeitliche Ausdehnung des Sendepulses bedingt dabei aber, dass innerhalb des Frontscheibenzeitintervalls nicht nur von der Frontscheibe zurückgeworfene Strahlung eines Sendestrahlungsbündels, sondern auch Strahlung des Sendestrahlungsbündels in den Frontscheibenrückstrahlungswert eingeht, die von einem in einem sehr kurzen Abstand in Sendestrahlungsrichtung hinter der Frontscheibe in der zu erfassenden Umgebung eventuell befindlichen Objekt zurückgeworfen wird. Das Strahlungsecho von der Frontscheibe ist nämlich einem Strahlungsecho eines Objektes, das z.B. in einem Abstand von 50 mm in Strahlungsrichtung hinter der Frontscheibe angeordnet ist, nur um ca. 0,33 ns voraus (50 mm × 2/c = 0,33 ns, mit c = Lichtgeschwindigkeit = 3×10⁸ m/s). Bei einer zeitlichen Ausdehnung eines Sendestrahlungsbündels von z.B. 4 ns kann sich also in dem Frontscheibenzeitintervall eine Überlappung von Rückstrahlung von der Frontscheibe und von einem nahen Objekt ergeben, sodass das Vorhandensein eines solchen Objekts den ermittelten Frontscheibenrückstrahlungswert beeinflussen kann.

Der vorliegenden Erfindung liegt die Idee zugrunde, durch eine Aufteilung der Frontscheibe in Bereiche hoher Verunreinigungsempfindlichkeit und geringer Verunreinigungsempfindlichkeit und durch Berücksichtigung dieser Aufteilung bei der Auswertung eine Verunreinigung der Frontscheibe von einem in der zu erfassenden Umgebung etwaig befindlichen Objekt unterscheidbar zu machen und somit eine zuverlässige Abschätzung eines Verunreinigungsgrads der Frontscheibe zu ermöglichen.

Eine Verunreinigung auf der Frontscheibe bewirkt im Vergleich zu einer sauberen Frontscheibe eine Erhöhung der von der Frontscheibe zurückgeworfenen Strahlungsmenge um einen bestimmten Betrag, d.h. aufgrund der Verunreinigung wird von der Frontscheibe in diesem Bereich eine erhöhte Strahlungsmenge der Strahlung eines Sendestrahlungsbündels zur Empfangseinheit zurückgeworfen.

Die Bereiche hoher und geringer Verunreinigungsempfindlichkeit der Frontscheibe sind so ausgebildet, dass eine Verunreinigungseinwirkung in einem Bereich hoher Verunreinigungsempfindlichkeit eine Erhöhung der von der Frontscheibe zurückgeworfenen Strahlungsmenge eines Sendestrahlungsbündels um einen größeren absoluten Betrag bewirkt, als eine Verunreinigungseinwirkung in einem Bereich geringer Verunreinigungsempfindlichkeit. Der Betrag, um den sich die zurückgeworfene Strahlungsmenge aufgrund der Verunreinigungseinwirkung erhöht, ist also in Bereichen hoher Verunreinigungsempfindlichkeit höher als in Bereichen geringer Verunreinigungsempfindlichkeit. Eine homogene Verunreinigungseinwirkung, die auf mehrere Bereiche der Frontscheibe einwirkt, macht sich also dadurch bemerkbar, dass an der Empfangseinheit Strahlungsmengen von der Frontscheibe empfangen werden, die für Bereiche verschiedener Verunreinigungsempfindlichkeit verschieden stark erhöht sind. Ein in der zu erfassenden Umgebung des Scanners vorhandenes Objekt führt hingegen zu einer Veränderung der zurückgeworfenen Strahlung, die unabhängig von der Verunreinigungsempfindlichkeit der Frontscheibe ist und unabhängig von der Verunreinigungsempfindlichkeit der Frontscheibe zu einer gleichförmigen Erhöhung der zurückgeworfenen Strahlungsmenge führen kann.

Durch den Vergleich der Strahlungsmengen, die von Bereichen verschiedener Verunreinigungsempfindlichkeit der Frontscheibe zurückgeworfen werden, bzw. der daraus abgeleiteten Frontscheibenrückstrahlungswerte, kann dementsprechend eine Aussage über einen Verunreinigungsgrad der Frontscheibe abgeleitet werden.

Der erfindungsgemäße optische Scanner erlaubt somit eine zuverlässige und effektive Abschätzung des Verunreinigungsgrads der Frontscheibe. Da der Verunreinigungsgrad durch die Auswertung von Sendestrahlungsbündeln abgeschätzt wird, die von der Frontscheibe zurückgeworfen werden, ist es nicht erforderlich, einen Fotoempfänger vorzusehen, der in Abstrahlungsrichtung betrachtet hinter der Frontscheibe liegt. Es kann auf eine Schrägstellung der Frontscheibe verzichtet werden und es kann insbesondere auch eine Frontscheibe in der Form eines Zylindermantels verwendet werden, sodass der optische Scanner auf geringerem Bauraum realisiert werden kann. Außerdem können für die Verunreinigungsabschätzung dieselbe Sende- und Empfangseinheit verwendet werden wie für die Objektdetektion, sodass keine zusätzlichen LEDs oder Fotoempfänger notwendig sind. Dies reduziert den konstruktiven Aufwand für die Verunreinigungsüberwachung zusätzlich.

Im vorliegenden Text werden die Begriffe "Licht" bzw. "Strahlung" nicht nur für sichtbares Licht, sondern auch für Strahlung anderer Wellenlänge, z.B. ultraviolett oder infrarot, verwendet.

Vorteilhafte Ausführungsformen der Erfindung sind in den Unteransprüchen, der Beschreibung und den Figuren beschrieben.

Bei dem optischen Scanner kann es sich insbesondere um einen Laserscanner handeln, der nach dem Lichtlaufzeitprinzip arbeitet. Hierbei werden Bündel von Laserstrahlen in den Erfassungsbereich ausgesendet und die aus dem Erfassungsbereich zurückgeworfene Strahlung eines Sendestrahlungsbündels wird in einem auf die Aussendung folgenden Auswerteintervall an der Auswerteeinheit ausgewertet. Bei Erkennung eines Objekts wird der Abstand des Objekts anhand der zwischen der Aussendung des Sendestrahlungsbündels und dem Empfangen der von dem Objekt zurückgeworfenen Strahlung vergangenen Zeit ermittelt. Die ermittelte Lichtlaufzeit wird durch die Lichtgeschwindigkeit und durch zwei (um den Hin- und Rückweg des Lichts zu berücksichtigen) geteilt, um den Objektabstand zu erhalten.

Die Lichtlaufzeit kann dabei z.B. über eine Zeitmessung gewonnen werden, die durch einen mit einem analogen Empfangssignal eines Strahlungssensors beaufschlagten Schwellwertentscheider getriggert wird.

Der Laserscanner kann die empfangene Strahlung aber auch über ein Samplingverfahren auswerten. Dabei kann das Ausgangssignal eines Strahlungssensors über ein auf die Aussendung eines Sendestrahlungsbündels folgenden Auswertezeitintervalls hochfrequent abgetastet und aufgezeichnet werden, beispielsweise mit einem Tastabstand von ungefähr 50 ps, so dass die von einem Sendestrahlungsbündel empfangene Rückstrahlung zeitaufgelöst für eine nachfolgende Auswertung zur Verfügung steht.

Das "Aussenden von Sendestrahlungsbündeln" kann im Rahmen der Erfindung auf unterschiedliche Weise realisiert werden. Zum einen können zeitlich beabstandet einzelne diskrete Sendestrahlungsbündel gesendet werden, beispielsweise durch einen pulsbetriebenen Laser. Zum anderen kann eine kontinuierlich betriebene Strahlungsquelle, beispielsweise ein kontinuierlich betriebener Laser, einen einzelnen Sendestrahl aussenden, der insbesondere zeitlich moduliert sein kann, wobei die Auswerteeinheit das Empfangssignal in zeitlichen Abständen auswertet und den Sendestrahl so in mehrere Sendestrahlungsbündel unterteilt.

Gemäß einer vorteilhaften Ausführungsform ist die Auswerteeinheit ausgebildet, um zur Ermittlung des Frontscheibenrückstrahlungswerts eines Sendestrahlungsbündels einen zeitlichen Mittelwert der in dem Frontscheibenzeitintervall empfangenen Strahlungsleistung zu ermitteln. Dadurch kann ein Einfluss von Rauschen auf die Auswertung besonders wirksam verringert werden.

Die Bildung des zeitlichen Mittelwerts kann z.B. dadurch erfolgen, dass ein Sensor, dessen Ausgangssignal von einer während eines Zeitintervalls empfangenen Strahlungsmenge abhängt, am Anfang des Frontscheibenzeitintervalls auf einen Startwert gesetzt wird und am Ende des Frontscheibenzeitintervalls ausgelesen wird. Ebenso kann das Ausgangssignal eines Strahlungssensors ausgewertet werden, der eine auftreffende Strahlungsleistung zeitlich hoch auflösend misst, wobei das Ausgangssignal des Strahlungssensors zu unterschiedlichen Zeitpunkten innerhalb des Frontscheibenzeitintervalls abgetastet wird (sampling, siehe oben) und aus den Abtastwerten anschließend ein Mittelwert gebildet wird.

Gemäß einer vorteilhaften Ausführungsform ist die Auswerteeinheit ausgebildet, um den Grad der Verunreinigung der Frontscheibe durch einen Vergleich von ermittelten Frontscheibenrückstrahlungswerten mit eingelernten Werten abzuschätzen, die bei einer sauberen Frontscheibe ermittelt worden sind. So kann z.B. bei einer sauberen Frontscheibe ein Unterschied zwischen der Rückstrahlung von einem Bereich hoher Verunreinigungsempfindlichkeit mit der Rückstrahlung von einem Bereich geringer Verunreinigungsempfindlichkeit eingelernt werden. Durch den Vergleich mit solchen eingelernten Werten kann die Zuverlässigkeit der Verunreinigungsabschätzung erhöht werden.

Nach einer weiteren Ausbildung der Erfindung wechseln sich Bereiche hoher Verunreinigungsempfindlichkeit und Bereiche geringer Verunreinigungsempfindlichkeit der Frontscheibe in Scanrichtung, insbesondere periodisch, ab. Auf diese Weise kann z.B. eine regelmäßige Modulierung der Frontscheibenempfindlichkeit erreicht werden, die über den gesamten Scanbereich eine zuverlässige Verunreinigungsabschätzung ermöglicht.

Bevorzugt sind die Bereiche hoher und geringer Verunreinigungsempfindlichkeit der Frontscheibe so dimensioniert und angeordnet, dass ein Bereich hoher Verunreinigungsempfindlichkeit und ein Bereich geringer Verunreinigungsempfindlichkeit zusammen einen Bereich der Frontscheibe bilden, dessen Ausdehnung in Scanrichtung geringer oder in etwa so groß ist, wie die Ausdehnung einer erwarteten, lokal homogenen Verunreinigungseinwirkung auf die Frontscheibe. Dadurch wird gewährleistet, dass ein Vergleich der Frontscheibenrückstrahlungswerte dieser Bereiche in der Regel auf einer im Wesentlichen identischen Verunreinigungseinwirkung beruht und somit aus dem Vergleich der Frontscheibenrückstrahlungswerte eines Bereichs hoher und eines Bereichs geringer Verunreinigungsempfindlichkeit eine zuverlässige Aussage über den Verunreinigungsgrad der Frontscheibe abgeleitet werden kann.

Bevorzugt ist ferner, dass die Bereiche hoher und geringer Verunreinigungsempfindlichkeit der Frontscheibe jeweils so dimensioniert sind, dass eine Vielzahl (z.B. 4 oder mehr) von aufeinander folgend ausgesendeten Sendestrahlungsbündeln auf denselben Bereich auftrifft.

Insbesondere bei einer solchen Anordnung ist die Auswerteeinheit bevorzugt derart ausgebildet, aus den Frontscheibenrückstrahlungswerten von mehreren aufeinander folgend ausgesendeten Sendestrahlungsbündeln örtlich gemittelte Frontscheibenrückstrahlungswerte zu ermitteln. Einem Sendestrahlungsbündel kann dabei ein örtlich gemittelter Frontscheibenrückstrahlungswert zugeordnet werden, der zum einen von dem Frontscheibenrückstrahlungswert des Sendestrahlungsbündels selbst und zum anderen von den Frontscheibenrückstrahlungswerten von Sendestrahlungsbündeln, die örtlich benachbart auf die Frontscheibe auftreffen, abhängt. Auf diese Weise kann der Einfluss von Rauschen auf die Verunreinigungsabschätzung noch weiter reduziert werden. Ein solcher örtlicher Mittelwert von Frontscheibenrückstrahlungswerten kann beispielsweise einen gleitenden Mittelwert der Frontscheibenrückstrahlungswerte der aufeinander folgend ausgesendeten Sendestrahlungsbündel umfassen.

Um die Robustheit der Auswertung gegenüber Rauscheinflüssen noch weiter zu erhöhen, kann die Auswerteeinheit außerdem ausgebildet sein, um über mehrere Scans hinweg ermittelte Frontscheibenrückstrahlungswerte, die zu in derselben Richtung abgestrahlten Sendestrahlungsbündeln gehören, zu einem über mehrere Scans gemittelten Frontscheibenrückstrahlungswert zu kombinieren, der dieser Richtung zugeordnet ist. Dabei kann gegebenenfalls zum Beispiel über mehr als 100 Scans gemittelt werden.

Gemäß einer vorteilhaften Ausführungsform ist die Auswerteeinheit ausgebildet, um aus mehreren Frontscheibenrückstrahlungswerten, die zu unterschiedlichen Richtungen ermittelt wurden, ein Frontscheibensignal zu erzeugen, dessen Zeitverlauf den ortsaufgelösten Verlauf der Frontscheibenrückstrahlungswerte auf der Frontscheibe widerspiegelt. Der ortsaufgelöste Verlauf der Frontscheibenrückstrahlungswerte und ein Vergleich dieses Verlaufs mit der örtlichen Aufteilung der Frontscheibe in Bereiche hoher und geringer Verunreinigungsempfindlichkeit erlaubt eine besonders einfache und wirksame Abschätzung einer Verunreinigung der Frontscheibe.

Die Auswerteeinheit kann beispielsweise ausgebildet sein, um zum Vergleich der Frontscheibenrückstrahlungswerte von Sendestrahlungsbündeln, die von Bereichen unterschiedlicher Verunreinigungsempfindlichkeit zurückgeworfen werden, den Signalanteil des Frontscheibensignals bei einer vorgegebenen Frequenz zu ermitteln, die einer Ortsfrequenz einer regelmäßigen Abfolge von Bereichen hoher und geringer Verunreinigungsempfindlichkeit der Frontscheibe entspricht. Die Auswerteeinrichtung kann hierzu beispielsweise einen Filter, insbesondere einen Bandpassfilter, umfassen, der zum Herausfiltern des Signalanteils des Frontscheibensignals bei der vorgegebenen Frequenz ausgebildet ist. Dies erlaubt eine besonders einfache Auswertung und Verunreinigungsabschätzung. Zum Beispiel kann die Amplitude des Frontscheibensignals bei der gegebenen Ortsfrequenz mit einem bei sauberer Frontscheibe eingelernten Wert verglichen werden, um eine Abschätzung des Verunreinigungsgrads der Frontscheibe zu erreichen.

Eine Verunreinigungseinwirkung kann beispielsweise eine Staubwolke oder eine Wasserdampfwolke umfassen, der die Frontscheibe ausgesetzt ist. Die Bereiche hoher und geringer Verunreinigungsempfindlichkeit der Frontscheibe können sich dabei prinzipiell dadurch unterscheiden, dass sich infolge einer bestimmten Verunreinigungseinwirkung wie beispielsweise einer Staub- oder Dampfwolke an einem Bereich hoher Verunreinigungsempfindlichkeit mehr Staub bzw. Feuchtigkeit absetzt als an den Bereichen geringer Verunreinigungsempfindlichkeit, so dass sich die infolge derselben Verunreinigungseinwirkung an den Bereichen hoher und geringer Verunreinigungsempfindlichkeit jeweils tatsächlich abgesetzte Verunreinigungsmenge unterscheidet. Dazu können die Bereiche unterschiedlicher Verunreinigungsempfindlichkeit der Frontscheibe z.B. durch hydrophile und hydrophobe Bereiche der Frontscheibe und/oder durch Bereiche unterschiedlicher Oberflächenrauhigkeit der Frontscheibe gebildet sein. Andererseits können die Bereiche hoher und geringer Verunreinigungsempfindlichkeit so ausgebildet sein, dass bei gleicher tatsächlich an den jeweiligen Bereichen abgesetzter Verunreinigungsmenge die Bereiche hoher Verunreinigungsempfindlichkeit eine stärkere Erhöhung der zurückgeworfenen Strahlungsmenge infolge der Verunreinigung bewirken als die Bereiche geringer Verunreinigungsempfindlichkeit. Hierzu können die Bereiche beispielsweise durch Bereiche der Frontscheibe unterschiedlichen optischen Brechungsverhaltens oder unterschiedlicher Oberflächenfeinstruktur gebildet sein.

Ein Vorteil der vorliegenden Erfindung ist es, dass eine gemeinsame Sendeeinheit auf kostengünstige Weise sowohl zur Abschätzung eines Verunreinigungsgrads der Frontscheibe als auch zur Detektion eines in dem Erfassungsbereich in der zu erfassenden Umgebung vorhandenen Objekts verwendet werden kann. Außerdem kann ein gemeinsamer Empfangspfad der Empfangseinheit zur Abschätzung eines Verunreinigungsgrads der Frontscheibe und zur Detektion eines in dem Erfassungsbereich in der zu erfassenden Umgebung vorhandenen Objekts verwendet werden.

Andererseits kann die Empfangseinheit aber auch einen ersten Empfangspfad zur Objektdetektion und einen zweiten Empfangspfad zur Abschätzung eines Verunreinigungsgrads der Frontscheibe umfassen. In diesem Fall ist bevorzugt die Empfindlichkeit des ersten Empfangspfads an eine erwartete, von Objekten in der zu erfassenden Umgebung zurückgeworfene Strahlungsmenge angepasst. Die Empfindlichkeit des zweiten Empfangspfads ist hingegen an eine erwartete, von der Frontscheibe zurückgeworfene Strahlungsmenge angepasst, wobei die Empfindlichkeit des zweiten Empfangspfads insbesondere deutlich höher sein kann als die Empfindlichkeit des ersten Empfangspfads. Der zweite Empfangspfad kann ferner z.B. durch eine geeignete Optik lediglich die Strahlung aus der Frontscheibenebene selektieren und empfangen. Auf diese Weise kann eine besonders empfindliche Verunreinigungsabschätzung bei gleichzeitig zuverlässiger Objektdetektion gewährleistet werden.

Nach einer vorteilhaften Ausführungsform weist die Sendeeinheit zwei oder mehr Strahlungsquellen zur Ausstrahlung von Sendestrahlungsbündeln auf, die derart angeordnet sind, dass die während eines Scans von Sendestrahlungsbündeln verschiedener Strahlungsquellen bestrahlten Bereiche verschiedene Spuren auf der Frontscheibe beschreiben. Auf diese Weise kann eine großflächige Überwachung der Frontscheibe auf Verunreinigungen erreicht werden.

Der optische Scanner kann als Sicherheitsüberwachungseinrichtung ausgebildet sein und zum Beispiel zum Personenschutz zur Absicherung von Maschinen ausgelegt sein und verwendet werden.

Das erfindungsgemäße Verfahren kann insbesondere mit einem wie vorstehend beschriebenen optischen Scanner ausgeführt werden. Die vorstehend in Bezug auf den optischen Scanner geschilderten vorteilhaften Ausführungsformen und Vorteile gelten entsprechend für das erfindungsgemäße Verfahren.

Gemäß einer vorteilhaften Ausgestaltung des erfindungsgemäßen Verfahrens werden bei einer sauberen Frontscheibe Frontscheibenrückstrahlungswerte erfasst und eingelernt. Bei der Abschätzung des Verunreinigungsgrads werden die aktuell ermittelten Frontscheibenrückstrahlungswerte mit den eingelernten Werten verglichen.

Nachfolgend wird die Erfindung beispielhaft anhand einer vorteilhaften Ausführungsform unter Bezugnahme auf die beigefügten schematischen Figuren beschrieben. Es zeigen:
- Fig. 1: einen Querschnitt eines optischen Scanners nach dem Stand der Technik;
- Fig. 2: einen Querschnitt eines optischen Scanners gemäß einer Ausführungsform der Erfindung;
- Fig. 3: einen Zeitverlauf eines zu einem Sendestrahlungsbündel gehörigen Empfangssignals des optischen Scanners von Fig. 2;
- Fig. 4: eine Frontscheibe mit Bereichen hoher und geringer Verunreinigungsempfindlichkeit und auf die Frontscheibe auftreffenden Sendestrahlungsbündeln in abgerollter Darstellung der an sich gebogenen Frontscheibe;
- Fig. 5: beispielhafte Verläufe eines Frontscheibensignals;
- Fig. 6: einen optischen Scanner in Teilansicht gemäß einer weiteren Ausführungsform der Erfindung mit zwei Strahlungsquellen;
- Fig. 7: die Teilansicht des optischen Scanner der Fig. 6 zu einem anderen Betriebszeitpunkt; und
- Fig. 8: den Verlauf der von den Strahlungsquellen der Anordnung der Fig. 6 und 7 auf der Frontscheibe beschriebenen Spuren.

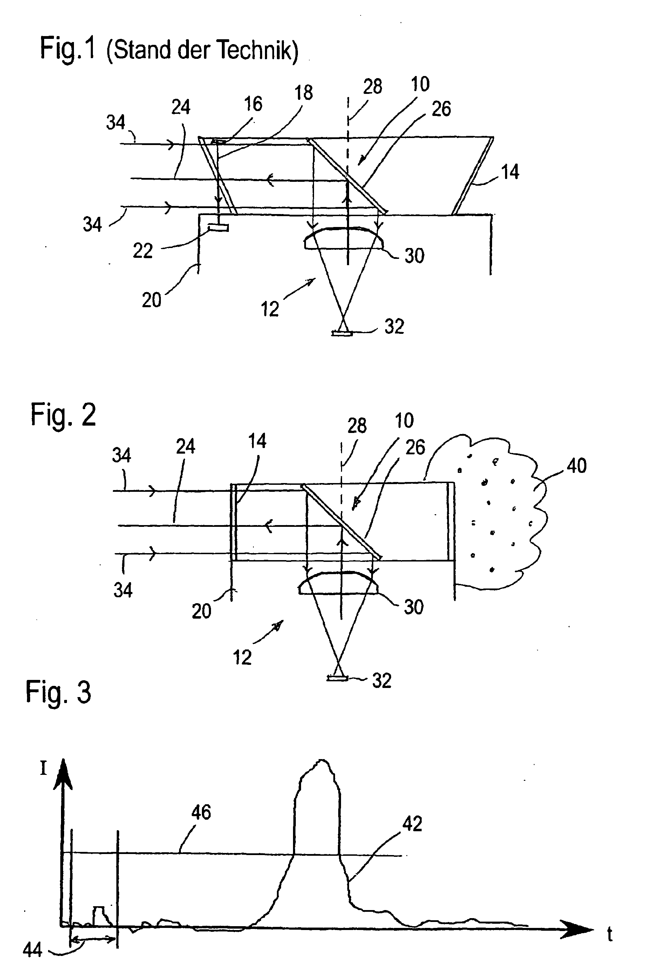

Fig. 1 zeigt einen bekannten Laserscanner und Fig. 2 zeigt einen Laserscanner gemäß einer Ausführungsform der Erfindung. Beide Scanner arbeiten nach dem Lichtlaufzeitprinzip.

Jeder Laserscanner umfasst dabei eine nicht dargestellte Sendeeinheit sowie eine Ablenkeinheit 10, eine Empfangseinheit 12 und eine Frontscheibe 14. Die Sendeeinheit dient der Aussendung von Sendestrahlungsbündeln 24 in einen Erfassungsbereich des Laserscanners. Sie umfasst einen pulsbetriebenen Laser, der in regelmäßigen Zeitabständen Sendestrahlungsbündel 24 in den Erfassungsbereich aussendet.

Eine Ablenkeinheit 10 des Laserscanners umfasst einen Spiegel 26, der um eine Drehachse 28 drehbar gelagert und durch eine Antriebseinheit drehend antreibbar ist. Die Sendestrahlungsbündel 24 werden von dem Laser im Wesentlichen parallel zur Drehachse 28 auf den Spiegel 26 gesendet und in eine Richtung im Wesentlichen senkrecht zur Drehachse 28 in den Erfassungsbereich ausgesendet. Die Sendestrahlungsbündel 24 werden somit in verschiedenen, in Scan-Richtung aufeinander folgenden Richtungen in den Erfassungsbereich gesendet.

Der Laserscanner ist hier als 360°-Laserscanner ausgebildet, d.h. eine Objektdetektion kann über den gesamten Drehwinkelbereich des Spiegels 26 von 360° erfolgen.

Der Laserscanner umfasst eine Empfangseinheit 12 zum Empfangen von aus dem Erfassungsbereich zurückgeworfener Strahlung von Sendestrahlungsbündeln 24. Die Empfangseinheit 12 umfasst eine Linse 30, die aus dem Erfassungsbereich zurückgeworfene Strahlung von Sendestrahlungsbündeln 24 auf einen Strahlungssensor 32 abbildet. Der Strahlungssensor 32 erzeugt in einem auf das Aussenden eines Sendestrahlungsbündels folgenden Auswertezeitintervall ein von der empfangenen Strahlungsleistung abhängiges Ausgangssignal, welches von einer nicht weiter dargestellten elektronischen Auswerteeinheit des Laserscanners in an sich bekannter Weise ausgewertet wird.

Beispielhaft sind Strahlen 34 gezeigt, die von einem entfernten, in dem Erfassungsbereich gelegenen Objekt zurückgeworfen werden. Die empfangene Strahlung wird über den Spiegel 26 auf die Linse 30 gelenkt und von der Linse 30 auf den Strahlungssensor 32 abgebildet. Mit der Drehung des Spiegels 26 wird somit nicht nur die Sendestrahlung, sondern zugleich auch das Empfangsfeld des Laserscanners durch den Erfassungsbereich bewegt.

Eine Frontscheibe 14 ist im Strahlengang zwischen dem Spiegel 26 und der zu erfassenden Umgebung des Laserscanners angeordnet.

Soweit vorstehend beschrieben sind die Funktionsweise der in Fig. 2 gezeigten Ausführungsform eines erfindungsgemäßen Laserscanners und die Funktionsweise des in Fig. 1 gezeigten bekannten Laserscanners gleich.

Der in Fig. 1 gezeigte bekannte Laserscanner weist zur Verunreinigungsabschätzung eine LED 16 auf, die einen Lichtstrahl 18 aussendet, der die Frontscheibe 14 durchdringt und von einer in einem Gehäuse 20 des Laserscanners angeordneten Fotodiode 22 detektiert wird. Zum Abschätzen einer Verunreinigung der Frontscheibe 14 wird eine Änderung eines Fotostroms der Fotodiode 22 überwacht.

Damit der Lichtstrahl 18 die Frontscheibe 14 durchstrahlt, ist diese geneigt ausgebildet und weist die Form eines Kegelstumpfmantels auf. Durch die Verbreiterung des Kegelstumpfmantels nach oben hin entsteht zusätzlicher Platzbedarf.

Wenn stattdessen die Feststellung einer Verunreinigung wie bei einer erfindungsgemäßen Ausführungsform anhand der von der Frontscheibe 14 zurückgeworfenen Strahlung von Sendestrahlungsbündeln 24 erfolgt, kann die Frontscheibe 14, wie in Fig. 2 gezeigt, problemlos zylindermantelförmig ausgebildet sein, wodurch der benötigte Bauraum im Vergleich zum Scanner der Fig. 1 reduziert werden kann.

Im Folgenden wird die Funktion des in Fig. 2 gezeigten erfindungsgemäßen Laserscanners im Detail erläutert.

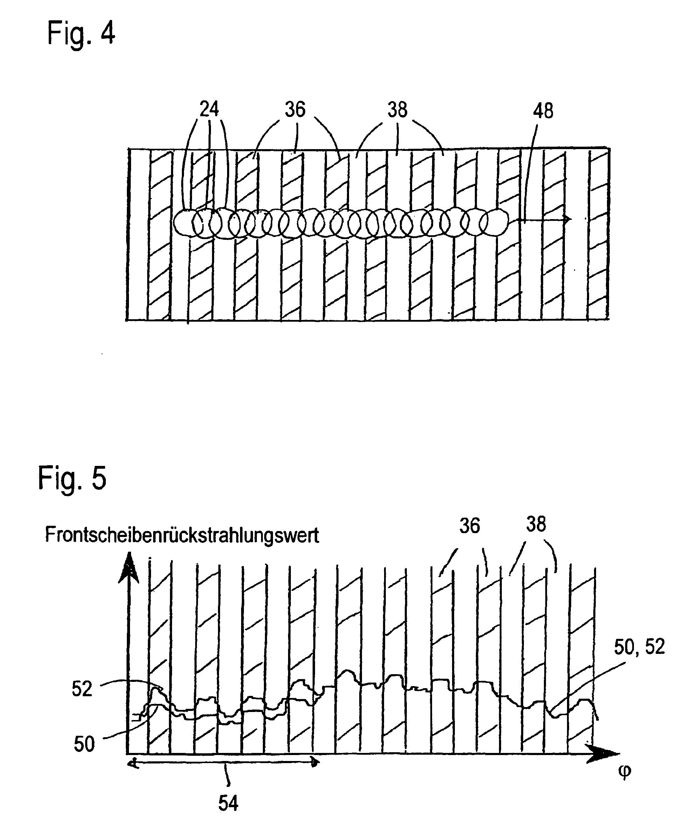

Wie zum Beispiel in Fig. 4 gezeigt, weist die Frontscheibe 14 Bereiche hoher Verunreinigungsempfindlichkeit 36 und Bereiche geringer Verunreinigungsempfindlichkeit 38 auf, wobei eine Verunreinigungseinwirkung 40 auf die Frontscheibe 14, wie sie in Fig. 2 in Form einer homogenen, auf die Frontscheibe 14 einwirkenden Staubwolke 40 dargestellt ist, in einem Bereich hoher Verunreinigungsempfindlichkeit 36 eine Erhöhung der von der Frontscheibe 14 zurückgeworfenen Strahlungsmenge eines Sendestrahlungsbündels 24 um einen größeren absoluten Betrag bewirkt als eine Verunreinigungseinwirkung 40 in einem Bereich geringer Verunreinigungsempfindlichkeit 38. Die Bereiche hoher und geringer Verunreinigungsempfindlichkeit 36, 38 können dabei beispielsweise durch Bereiche höherer und geringerer Oberflächenrauhigkeit, durch hydrophile und hydrophobe Bereiche oder durch Bereiche unterschiedlichen optischen Brechungsverhaltens der Frontscheibe gebildet sein.

Fig. 3 gibt einen beispielhaften zeitlichen Verlauf einer an der Empfangseinheit 12 empfangenen Strahlungsleistung während eines auf die Aussendung eines Sendestrahlungsbündels 24 folgenden Auswertezeitintervalls an. Gezeigt ist ein zeitlicher Verlauf des Ausgangssignals 42 des Strahlungssensors 32, welches den Verlauf der empfangenen Strahlungsleistung I über der Zeit t angibt. Angedeutet ist auch das zu dem Strahlungsbündel 24 gehörige Frontscheibenzeitintervall 44, das dem Zeitintervall entspricht, in dem eine von der Frontscheibe 14 zurückgeworfene Strahlung eines Sendestrahlungsbündels 24 an der Empfangseinheit 12 erwartet wird. Der zeitliche Abstand zwischen dem Beginn des Frontscheibenzeitintervalls und dem Beginn der Aussendung des Sendestrahlungsbündels 24 (t=0) entspricht dabei in etwa der Lichtlaufzeit von der Sendeeinheit zur Frontscheibe 14 und von der Frontscheibe 14 zurück zur Empfangseinheit 12. Der Abstand zwischen dem Beginn und dem Ende des Frontscheibenzeitintervalls 44 entspricht in etwa der Pulsbreite des Lasers und damit der zeitlichen Ausdehnung eines Sendestrahlungsbündels 24, die im vorliegenden Ausführungsbeispiel ca. 4 ns beträgt.

Eine nicht gezeigte Auswerteeinheit ermittelt aus den Signalen des Strahlungssensors 32 für jede Richtung, in die ein Sendestrahlungsbündel 24 ausgesendet wird, einen Frontscheibenrückstrahlungswert, der von der durch die Empfangseinheit 12 in dem Frontscheibenzeitintervall 44 empfangenen Strahlungsmenge abhängt. Die Auswerteeinheit bildet hierzu einen zeitlichen Mittelwert der in dem Frontscheibenzeitintervall 44 empfangenen Strahlungsleistung.

Der Laserscanner arbeitet im vorliegenden Ausführungsbeispiel nach dem Sampling-Prinzip, d.h. das Ausgangssignal 42 wird von der Auswerteeinheit hochfrequent abgetastet, beispielsweise mit einem Tastabstand im Bereich von 50 ps, und die abgetasteten Werte werden aufgezeichnet, sodass im Wesentlichen das komplette zeitaufgelöste Ausgangssignal 42 aufgezeichnet und anschließend ausgewertet werden kann. Die Frontscheibenrückstrahlungswerte werden durch Addieren der in dem Frontscheibenzeitintervall 44 liegenden Abtastwerte ermittelt und ggf. normiert.

Anhand des Ausgangssignals 42 kann nicht nur eine Verunreinigungsüberwachung erfolgen, sondern zugleich auch eine Objektdetektion. Hierzu kann ein Vergleich des Ausgangssignals 42 mit einem Schwellwert 46 erfolgen, wobei bei Überschreiten des Schwellwerts 46 ein positives Objektfeststellungssignal erzeugt wird und ein Abstand des Objekts ermittelt wird, indem der zeitliche Abstand zwischen der Schwellwertüberschreitung und dem Beginn der Aussendung des betreffenden Sendestrahlungsbündels 24 ermittelt wird. Im vorliegenden Ausführungsbeispiel erfolgt die Überwachung der Schwellwertüberschreitung anhand des abgetasteten und aufgezeichneten Ausgangssignals. In anderen, nicht dargestellten Ausführungsbeispielen kann hierzu aber auch ein mit dem analogen Ausgangssignal 42 beaufschlagter Schwellwertentscheider vorgesehen sein.

Fig. 4 zeigt schematisch die Aufteilung der Frontscheibe 14 in Bereiche hoher Verunreinigungsempfindlichkeit 36 und Bereiche geringer Verunreinigungsempfindlichkeit 38. Die Bereiche 36 und 38 wechseln sich in einer Scan-Richtung 48 periodisch ab. Gezeigt sind ferner mehrere Sendestrahlungsbündel 24, die aufeinander folgend ausgesendet werden und dabei durch den Spiegel 26 zunehmend in Scan-Richtung 48 abgelenkt werden. Der Abstand zwischen zwei Sendestrahlungsbündeln 24 und der Durchmesser eines Sendestrahlungsbündels 24 im Bereich der Frontscheibe 14 sind in Fig. 4 übertrieben groß dargestellt. Tatsächlich sind die Abstände zwischen einzelnen Sendestrahlungsbündeln 24 deutlich geringer, sodass eine Vielzahl von aufeinander folgend ausgesendeten Sendestrahlungsbündeln 24 auf demselben Bereich 36, 38 der Frontscheibe 14 auftrifft.

Jedem Sendestrahlungsbündel 24 bzw. der zugehörigen Sendestrahlrichtung wird durch die Auswerteeinheit ein wie vorstehend beschrieben ermittelter Frontscheibenrückstrahlungswert zugeordnet. Zudem wird von der Auswerteeinheit für jedes Sendestrahlungsbündel 24 ein örtlich gemittelter Frontscheibenrückstrahlungswert ermittelt, in den der Frontscheibenrückstrahlungswert des Sendestrahlungsbündels 24 selbst sowie zusätzlich die Werte örtlich benachbarter Sendestrahlungsbündeln 24 eingehen. Dies kann insbesondere durch Bilden eines gleitenden Mittelwerts der Frontscheibenrückstrahlungswerte der aufeinander folgend ausgesendeten Sendestrahlungsbündel 24 erfolgen. Durch das Bilden dieser örtlich gemittelten Frontscheibenrückstrahlungswerte wird der Einfluss von Rauschen auf die Auswertung zusätzlich unterdrückt.

Die Auswerteinheit führt zusätzlich zu der örtlichen Mittelung der Frontscheibenrückstrahlungswerte über mehrere Nachbarn eine scanweise Mittelung durch, bei der ein örtlich gemittelter Frontscheibenrückstrahlungswert, der zu einer bestimmten Richtung ermittelt wurde, zusätzlich über mehrere Scans hinweg gemittelt wird, um einen über mehrere Scans hinweg gemittelten Frontscheibenrückstrahlungswert zu erhalten. Dadurch wird Rauschen noch weiter unterdrückt.

In Fig. 5 sind die so ermittelten, über mehrere Scans hinweg gemittelten Frontscheibenrückstrahlungswerte über einem Scanwinkel ϕ aufgetragen, der eine Richtung angibt, in der die zugehörigen Sendestrahlungsbündel auf die Frontscheibe 14 gelenkt werden. Ferner sind die Bereiche hoher und geringer Verunreinigungsempfindlichkeit 36, 38 dargestellt, die von den Sendestrahlungsbündeln bestrahlt werden. Die Frontscheibenrückstrahlungswerte bilden ein Frontscheibensignal 50, 52, das den Verlauf der Frontscheibenrückstrahlungswerte in Bezug auf den Ort des Auftreffens der zugehörigen Sendestrahlungsbündel auf die Frontscheibe angibt.

In Fig. 5 ist ein Frontscheibensignal 50 dargestellt, das während eines Einlernvorgangs bei sauberer Frontscheibe 14 ermittelt wurde, sowie ein weiteres Frontscheibensignal 52, das bei einer verunreinigten Frontscheibe 14 während eines Betriebs des Laserscanners ermittelt wurde.

Das während des Betriebs des Laserscanners ermittelte Frontscheibensignal 52 unterscheidet sich in einem Scanwinkelbereich 54 aufgrund einer in diesem Bereich der Frontscheibe 14 vorhandenen Verunreinigung der Frontscheibe 14 von dem eingelernten Frontscheibensignal 50, wobei die Verunreinigung von einer im Wesentlichen innerhalb des Scanwinkelbereichs 54 homogenen Verunreinigungseinwirkung 40 wie beispielsweise einer Staubwolke 40 herrührt.

Wie in Fig. 5 gezeigt, liefert die saubere Frontscheibe 14 in den Bereichen 36 hoher Verunreinigungsempfindlichkeit höhere Frontscheibenrückstrahlungswerte als in den Bereichen 38 geringer Verunreinigungsempfindlichkeit, sodass das Frontscheibensignal 50 mit einer Frequenz moduliert ist, die einer durch die Periode der sich periodisch abwechselnden Bereiche 36, 38 bestimmten Ortsfrequenz der Bereiche 36, 38 entspricht.

Die Verunreinigungseinwirkung in den Bereichen 36 hoher Verunreinigungsempfindlichkeit bewirkt einen stärkeren Anstieg des Frontscheibensignals 52 gegenüber dem Frontscheibensignal 50 als in den Bereichen 38 geringer Verunreinigungsempfindlichkeit. Das Frontscheibensignal 52 weist somit in dem Scanwinkelbereich 54 eine ausgeprägtere Modulation auf als das Frontscheibensignal 50. Die ausgeprägtere Modulation wird von der Auswerteeinheit erkannt und als Verunreinigung klassifiziert. Die Verunreinigung kann von einem nahe der Frontscheibe 14 in der zu erfassenden Umgebung des Laserscanners etwaig befindlichen Objekt unterschieden werden, da ein solches Objekt eine Veränderung des Frontscheibensignals 52 zur Folge hätte, die im Wesentlichen unabhängig von der Verunreinigungsempfindlichkeit der Frontscheibe 14 in den betreffenden Bereichen ist, sodass die Veränderung keine Verstärkung der Modulation des Frontscheibensignals 52 bei der Ortsfrequenz der Bereiche 36, 38 ergeben würde.

Um wie vorstehend beschrieben eine Verunreinigung zu erkennen, ermittelt die Auswerteeinheit den Signalanteil des Frontscheibensignals 52 bei der Ortsfrequenz der Bereiche 36, 38. Dazu wird das Frontscheibensignal 52 einem elektronischen bzw. numerischen Filter zugeführt, welches den Signalanteil des Frontscheibensignal 52 bei dieser Frequenz herausfiltert. Eine Amplitude dieses Signalanteils wird dann mit einem eingelernten Wert verglichen, der zum Beispiel aus dem eingelernten Frontscheibensignal 50 ermittelt und abgespeichert worden ist, um den Verunreinigungsgrad der Frontscheibe 14 abzuschätzen.

Wie z.B. aus Fig. 4 ersichtlich, beschreiben die von einer Strahlungsquelle gesendeten Sendestrahlungsbündel eine relativ schmale Spur auf der Frontscheibe 14, sodass eine Verunreinigung insbesondere dort erkannt werden kann.

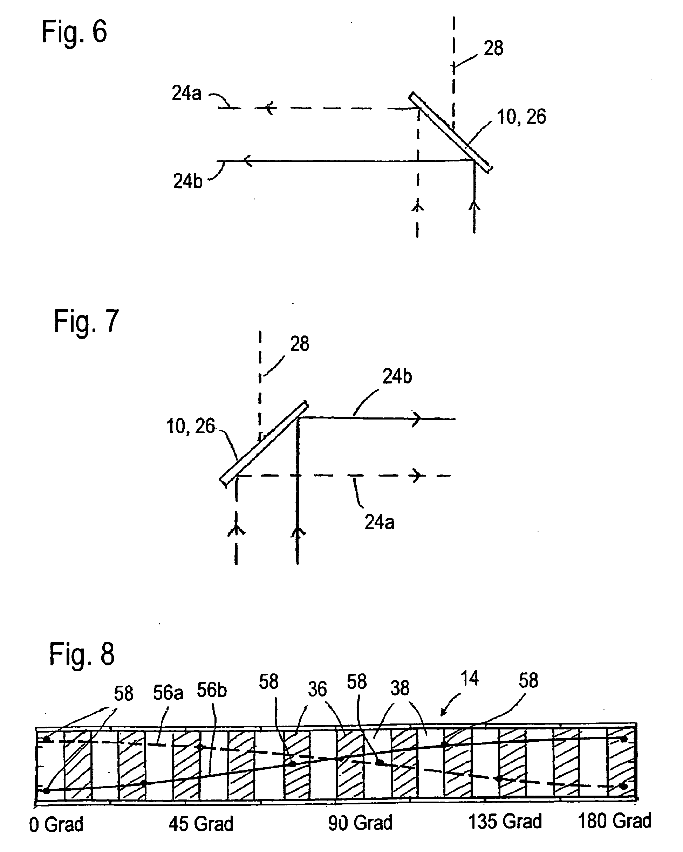

Fig. 6 und 7 zeigen eine weitere Ausführungsform der Erfindung, bei der durch die Verwendung von mehreren Strahlungsquellen eine großflächigere Überwachung der Frontscheibe 14 auf Verunreinigungen erzielt wird.

Dazu sind zwei nicht dargestellte Strahlungsquellen vorgesehen, die gegenüber der Drehachse 28 des Spiegels 26 versetzt angeordnet sind, so dass die von den beiden Strahlungsquellen gesendeten Sendestrahlungsbündel 24a (gestrichelt dargestellt) und 24b (durchgezogen dargestellt) auf gegenüberliegenden Seiten der Drehachse 28 auf den Spiegel 26 auftref fen.

Fig. 8 zeigt die Spuren 56a und 56b, die die Sendestrahlungsbündel 24a und 24b im Zuge eines Scans auf der Frontscheibe 14 beschreiben. In der in Fig. 6 gezeigten Stellung des Spiegels 26, die z.B. einem Drehwinkel von 0° entspricht, trifft dabei ein Sendestrahlungsbündel 24a der einen Strahlungsquelle oberhalb eines Sendestrahlungsbündels 24b der anderen Strahlungsquelle auf die Frontscheibe 14.

Bei der in Fig. 7 gezeigten Drehwinkelstellung des Spiegels 26 von 180° trifft hingegen das Sendestrahlungsbündel 24b oberhalb des Sendestrahlungsbündel 24a auf die Frontscheibe 14. Zwischen diesen beiden Winkelstellungen des Spiegels 26 ergeben sich die in Fig. 8 gezeigten Spuren 56a, 56b, wobei die Punkte 58 jeweils die Position eines Sendestrahlungsbündels 24a und 24b auf der Frontscheibe 14 bei einer bestimmten Winkelstellung des Spiegels 26 anzeigen. An den Punkten 58 zeigt sich, dass zwischen den Drehwinkelstellungen von 0° und 180° des Spiegels 26 die Sendestrahlungsbündel 24a, 24b jeweils in Scan-Richtung zueinander versetzt auf die Frontscheibe 14 auftreffen.

In den vorstehend in Bezug auf Fig. 1 bis 8 beschriebenen Ausführungsbeispielen wird derselbe Empfangspfad sowohl zur Objektdetektion als auch zur Verunreinigungsabschätzung verwendet. Wie vorstehend beschrieben, wird dabei dasselbe Ausgangssignal 42 des Strahlungssensors 32 verwendet. Im Rahmen der Erfindung kann die Empfangseinheit 12 aber auch zwei separate Empfangspfade aufweisen, wobei die Empfindlichkeit eines Empfangspfads an die durchschnittlichen Signalpegel bei einer Objektdetektion angepasst ist und die Empfindlichkeit des anderen Signalpfads an die durchschnittlichen Signalpegel in dem Frontscheibenzeitintervall 44 angepasst ist. Zwei solche Empfangspfade können dabei dieselbe Linse 30 verwenden und durch zwei getrennte Strahlungssensoren 32 gebildet sein, es können aber auch zwei Linsen 30 und zwei Strahlungssensoren 32 verwendet werden.

Werden für Objektdetektion und Verunreinigungsabschätzung zwei verschiedene Strahlungssensoren 32 verwendet, so können die von den beiden Strahlungssensoren 32 erzeugten Ausgangssignale zeitlich gemultiplext einer Auswerteeinheit wie beispielsweise einem A/D-Wandler zugeführt werden. Auf diese Weise kann derselbe A/D-Wandler für die Auswertung der Ausgangssignale beider Sensoren 32 verwendet werden. Um einen zeitlichen Versatz zu erzielen, kann zumindest eines der Signale vor dem Multiplexing über eine Verzögerungsleitung geführt werden.

### Bezugszeichenliste

- 10: Ablenkeinheit
- 12: Empfangseinheit
- 14: Frontscheibe
- 16: LED
- 18: Lichtstrahl
- 20: Gehäuse
- 22: Fotodiode
- 24: Sendestrahlungsbündel
- 26: Spiegel
- 28: Drehachse
- 30: Linse
- 32: Strahlungssensor
- 34: empfangenes Licht
- 36: Bereich hoher Verunreinigungsempfindlichkeit
- 38: Bereich geringer Verunreinigungsempfindlichkeit
- 40: Verunreinigungseinwirkung
- 42: Ausgangssignal
- 44: Frontscheibenzeitintervall
- 46: Schwellwert
- 48: Scan-Richtung
- 50, 52: Frontscheibensignal
- 54: Scanwinkelbereich
- 56a, b: Spur auf der Frontscheibe
- 58: Punkt auf der Frontscheibe
- I: Strahlungsleistung
- t: Zeit
- ϕ: Scanwinkel

## Patentansprüche

1. Optischer Scanner, insbesondere Laserscanner nach dem Lichtlaufzeitprinzip, mit
- einer Sendeeinheit zur Aussendung von Sendestrahlungsbündeln (24) in einen Erfassungsbereich,
- einer Ablenkeinheit (10), um während eines Scans Sendestrahlungsbündel (24) in verschiedenen in einer Scan-Richtung (48) aufeinander folgenden Richtungen in den Erfassungsbereich zu lenken,
- einer Empfangseinheit (12) zum Empfangen von aus dem Erfassungsbereich zurückgeworfener Strahlung von Sendestrahlungsbündeln (24),
- einer Auswerteeinheit zum Auswerten der von der Empfangseinheit (12) empfangenen Strahlung und
- einer für die Sendestrahlungsbündel (24) durchlässigen, im Strahlengang zwischen der Ablenkeinheit (10) und der zu erfassenden Umgebung angeordneten Frontscheibe (14),
**dadurch gekennzeichnet, dass**
- die Frontscheibe (14) Bereiche hoher Verunreinigungsempfindlichkeit (36) und Bereiche geringer Verunreinigungsempfindlichkeit (38) aufweist, wobei diese Bereiche (36, 38) derart ausgestaltet sind, dass eine Verunreinigungseinwirkung (40) auf die Frontscheibe (14) in einem Bereich hoher Verunreinigungsempfindlichkeit (36) eine Erhöhung der von der Frontscheibe (14) zurückgeworfenen Strahlungsmenge eines Sendestrahlungsbündels (24) um einen größeren absoluten Betrag bewirkt als eine Verunreinigungseinwirkung (40) in einem Bereich geringer Verunreinigungsempfindlichkeit (38), und
- die Auswerteeinheit ausgebildet ist, um für ein Sendestrahlungsbündel (24) einen Frontscheibenrückstrahlungswert zu ermitteln, der von der durch die Empfangseinheit (12) von dem Sendestrahlungsbündel (24) in einem Frontscheibenzeitintervall (44) empfangenen Strahlungsmenge abhängt, wobei das Frontscheibenzeitintervall (44) dem Zeitintervall entspricht, in dem eine von der Frontscheibe (14) zurückgeworfene Strahlung des Sendestrahlungsbündels (24) an der Empfangseinheit (12) erwartet wird, und um zur Abschätzung eines Verunreinigungsgrads der Frontscheibe (14) wenigstens einen Frontscheibenrückstrahlungswert, der einem von einem Bereich hoher Verunreinigungsempfindlichkeit (36) der Frontscheibe (14) zurückgeworfenen Sendestrahlungsbündel (24) zugeordnet ist, mit wenigstens einem Frontscheibenrückstrahlungswert zu vergleichen, der einem von einem Bereich geringer Verunreinigungsempfindlichkeit (38) der Frontscheibe (14) zurückgeworfenen Sendestrahlungsbündel (24) zugeordnet ist.

2. Optischer Scanner nach Anspruch 1,
**dadurch gekennzeichnet, dass**
die Auswerteeinheit ausgebildet ist, um zur Ermittlung des Frontscheibenrückstrahlungswerts eines Sendestrahlungsbündels (24) einen zeitlichen Mittelwert der in dem Frontscheibenzeitintervall (44) empfangenen Strahlungsleistung zu ermitteln.

3. Optischer Scanner nach einem der Ansprüche 1 oder 2,
**dadurch gekennzeichnet, dass**
die Auswerteeinheit ausgebildet ist, um den Grad der Verunreinigung der Frontscheibe (14) durch einen Vergleich von ermittelten Frontscheibenrückstrahlungswerten mit eingelernten Werten abzuschätzen, die bei einer sauberen Frontscheibe (14) ermittelt worden sind.

4. Optischer Scanner nach zumindest einem der vorstehenden Ansprüche,
**dadurch gekennzeichnet, dass**
sich Bereiche hoher Verunreinigungsempfindlichkeit (36) und Bereiche geringer Verunreinigungsempfindlichkeit (38) der Frontscheibe (14) in Scan-Richtung (48), insbesondere periodisch, abwechseln.

5. Optischer Scanner nach Anspruch 4,
**dadurch gekennzeichnet, dass**
die Auswerteeinheit ausgebildet ist, um unter Verwendung von mehreren Frontscheibenrückstrahlungswerten, die zu unterschiedlichen Richtungen ermittelt wurden, ein Frontscheibensignal (50, 52) zu erzeugen, dessen Zeitverlauf einen ortsaufgelösten Verlauf der Frontscheibenrückstrahlungswerte widerspiegelt.

6. Optischer Scanner nach Anspruch 5,
**dadurch gekennzeichnet, dass**
die Auswerteeinheit ausgebildet ist, um zum Vergleich der Frontscheibenrückstrahlungswerte von Sendestrahlungsbündeln (24), die von Bereichen unterschiedlicher Verunreinigungsempfindlichkeit (36, 38) zurückgeworfen werden, einen Signalanteil des Frontscheibensignals (50, 52) bei einer vorgegebenen Frequenz zu ermitteln, die einer Ortsfrequenz einer regelmäßigen Abfolge von Bereichen hoher und geringer Verunreinigungsempfindlichkeit (36, 38) der Frontscheibe (14) entspricht.

7. Optischer Scanner nach zumindest einem der vorstehenden Ansprüche,
**dadurch gekennzeichnet, dass**
die Bereiche hoher und geringer Verunreinigungsempfindlichkeit (36, 38) der Frontscheibe (14) jeweils so dimensioniert sind, dass mehrere aufeinander folgend ausgesendete Sendestrahlungsbündel (24) auf denselben Bereich (36, 38) auftreffen.

8. Optischer Scanner nach zumindest einem der vorstehenden Ansprüche,
**dadurch gekennzeichnet, dass**
die Auswerteeinheit ausgebildet ist, um aus den Frontscheibenrückstrahlungswerten von mehreren aufeinander folgend ausgesendeten Sendestrahlungsbündeln (24) örtlich gemittelte Frontscheibenrückstrahlungswerte zu ermitteln, insbesondere durch Bilden eines gleitenden Mittelwerts der Frontscheibenrückstrahlungswerte der aufeinander folgend ausgesendeten Sendestrahlungsbündel (24).

9. Optischer Scanner nach zumindest einem der vorstehenden Ansprüche,
**dadurch gekennzeichnet, dass**
die Auswerteeinheit ausgebildet ist, um über mehrere Scans hinweg ermittelte Frontscheibenrückstrahlungswerte, die zu in derselben Richtung abgestrahlten Sendestrahlungsbündeln (24) gehören, zu einem über mehrere Scans gemittelten Frontscheibenrückstrahlungswert zu kombinieren, der dieser Richtung zugeordnet ist.

10. Optischer Scanner nach zumindest einem der vorstehenden Ansprüche,
**dadurch gekennzeichnet, dass**
die Bereiche unterschiedlicher Verunreinigungsempfindlichkeit (36, 38) der Frontscheibe (14) durch hydrophile und hydrophobe Bereiche, durch Bereiche unterschiedlicher Oberflächenrauhigkeit oder durch Bereiche unterschiedlichen optischen Brechungsverhaltens der Frontscheibe (14) gebildet sind.

11. Optischer Scanner nach zumindest einem der vorstehenden Ansprüche,
**dadurch gekennzeichnet,**
- **dass** der gleiche Empfangspfad der Empfangseinheit (12) zur Abschätzung eines Verunreinigungsgrads der Frontscheibe (14) und zur Detektion eines in der zu erfassenden Umgebung vorhandenen Objekts verwendet wird, oder
- **dass** die Empfangseinheit (12) einen ersten Empfangspfad umfasst, der zur Objektdetektion ausgebildet ist und dessen Empfindlichkeit vorzugsweise an eine erwartete, von Objekten in der zu erfassenden Umgebung zurückgeworfene Strahlungsmenge angepasst ist, sowie einen zweiten Empfangspfad zur Abschätzung eines Verunreinigungsgrads der Frontscheibe (14), dessen Empfindlichkeit an eine erwartete, von der Frontscheibe (14) zurückgeworfene Strahlungsmenge angepasst ist.

12. Optischer Scanner nach zumindest einem der vorstehenden Ansprüche,
**dadurch gekennzeichnet, dass**
die Sendeeinheit zwei oder mehr Strahlungsquellen zur Ausstrahlung von Sendestrahlungsbündeln (24) umfasst, die derart angeordnet sind, dass die Sendestrahlungsbündel (24) verschiedener Strahlungsquellen während eines Scans verschiedene Spuren (56a, 56b) auf der Frontscheibe (14) überstreichen.

13. Verfahren zur Abschätzung eines Verunreinigungsgrades einer Frontscheibe (14) eines optischen Scanners mit einer Sendeeinheit, einer Empfangseinheit (12) und einer Ablenkeinheit (10), wobei die Frontscheibe (14) im Strahlengang zwischen der Ablenkeinheit (10) und der zu erfassenden Umgebung angeordnet ist,
- bei dem während eines Scans Sendestrahlungsbündel (24) mittels der Sendeeinheit ausgesendet und mittels der Ablenkeinheit (10) in verschiedenen, in einer Scan-Richtung (48) aufeinander folgenden Richtungen in einen Erfassungsbereich gelenkt werden,
- bei dem aus dem Erfassungsbereich zurückgeworfene Strahlung von Sendestrahlungsbündeln (24) mittels der Empfangseinheit (12) empfangen wird,
- bei dem eine Frontscheibe (14) eingesetzt wird, die Bereiche hoher Verunreinigungsempfindlichkeit (36) und Bereiche geringer Verunreinigungsempfindlichkeit (38) aufweist, wobei diese Bereiche (36 ,38) so ausgestaltet sind, dass eine Verunreinigungseinwirkung (40) auf die Frontscheibe (14) in einem Bereich hoher Verunreinigungsempfindlichkeit (36) eine Erhöhung der von der Frontscheibe (14) zurückgeworfenen Strahlungsmenge eines Sendestrahlungsbündels (24) um einen größeren absoluten Betrag bewirkt als eine Verunreinigungseinwirkung (40) in einem Bereich geringer Verunreinigungsempfindlichkeit (38),
- bei dem für ein Sendestrahlungsbündel (24) ein Frontscheibenrückstrahlungswert ermittelt wird, der von der durch die Empfangseinheit (12) von dem Sendestrahlungsbündel (24) in einem Frontscheibenzeitintervall (44) empfangenen Strahlungsmenge abhängt, wobei das Frontscheibenzeitintervall (44) dem Zeitintervall entspricht, in dem eine von der Frontscheibe (14) zurückgeworfene Strahlung des Sendestrahlungsbündels (24) an der Empfangseinheit (12) erwartet wird, und
- bei dem zur Abschätzung des Verunreinigungsgrads der Frontscheibe (14) wenigstens ein Frontscheibenrückstrahlungswert, der einem von einem Bereich hoher Verunreinigungsempfindlichkeit (36) der Frontscheibe (14) zurückgeworfenen Sendestrahlungsbündel (24) zugeordnet ist, mit wenigstens einem Frontscheibenrückstrahlungswert verglichen wird, der einem von einem Bereich geringer Verunreinigungsempfindlichkeit (38) der Frontscheibe (14) zurückgeworfenen Sendestrahlungsbündel (24) zugeordnet ist.

14. Verfahren nach Anspruch 13,
**dadurch gekennzeichnet, dass**
bei einer sauberen Frontscheibe (14) Frontscheibenrückstrahlungswerte erfasst und eingelernt werden und dass bei der Abschätzung des Verunreinigungsgrads die ermittelten Frontscheibenrückstrahlungswerte mit den eingelernten Werten verglichen werden.

## Claims

1. An optical scanner, in particular a laser scanner in accordance with the principle of the time of flight of light, comprising
- a transmission unit for transmitting transmission radiation beams (24) into a detection zone;
- a deflection unit (10) to direct transmission radiation beams (24) into the detection zone in different directions following one another in a scan direction during a scan;
- a reception unit (12) for receiving radiation of transmission radiation beams (24) reflected from the detection zone;
- an evaluation unit for evaluating the radiation received by the reception unit (12); and
- a front screen (14) permeable for the transmission radiation beam (24) and arranged between the deflection unit (10) and the environment to be detected;
**characterised in that**
- the front screen (14) has regions of high contamination sensitivity (36) and regions of low contamination sensitivity (38), with these regions (36, 38) being designed such that a contamination influence (40) on the front screen (14) in a region of high contamination sensitivity (36) effects an increase in the radiation quantity of a transmission radiation beam (24) reflected by the front screen (14) by a larger
- absolute amount than a contamination influence (40) in a region of low contamination sensitivity (38); and
- the evaluation unit is designed to determine a front screen reflection value for a transmission radiation beam (24) which depends on the radiation quantity received by the reception unit (12) from the transmission radiation beam (24) in a front screen time interval (44), with the front screen time interval (44) corresponding to the time interval in which a radiation of the transmission radiation beam (24) reflected by the front screen (14) is expected at the reception unit (12) and, in order to estimate a degree of contamination of the front screen (14), to compare at least one front screen reflection value which is associated with a transmission radiation beam (24) reflected by a region of high contamination sensitivity (36) of the front screen (14) with at least one front screen rejection value which is associated with a transmission radiation beam (24) reflected by a region of low contamination sensitivity (38) of the front screen (14).

2. An optical scanner in accordance with claim 1,
**characterised in that**
the evaluation unit is configured to determine a mean time value of the radiation power received in the front screen time interval (44) for determining the front screen reflection value of a transmission radiation beam (24).

3. An optical scanner in accordance with one of the claims 1 or 2,
**characterised in that**
the evaluation unit is configured to estimate the degree of the contamination of the front screen (14) by a comparison of determined front screen reflection values with taught values which were determined with a clean front screen (14).

4. An optical scanner in accordance with at least one of the preceding claims,
**characterised in that**
regions of high contamination sensitivity (36) and regions of low contamination sensitivity (38) of the front screen (14) alternate, in particular periodically, in the scan direction (48).

5. An optical scanner in accordance with claim 4,
**characterised in that**
the evaluation unit is configured to generate a front screen signal (50, 52) whose time curve reflects a spatially resolved curve of the front screen reflection values while using a plurality of front screen reflection values which were determined for different directions.

6. An optical scanner in accordance with claim 5,
**characterised in that**
the evaluation unit is configured to determine a signal portion of the front screen signal (50, 52) at a predefined frequency which corresponds to a spatial frequency of a regular sequence of regions of high and low contamination sensitivity (36, 38) of the front screen (14) for comparing the front screen reflection values of transmission radiation beams (24) which are reflected by regions of different contamination sensitivity (36, 38).

7. An optical scanner in accordance with at least one of the preceding claims,
**characterised in that**
the regions of high and low contamination sensitivity (36, 38) of the front screen (14) are each dimensioned so that a plurality of transmitted transmission radiation beams (24) sequentially impact the same region (36, 38).

8. An optical scanner in accordance with at least one of the preceding claims,
**characterised in that**
the evaluation unit is configured to determine spatially determined front screen reflection values from the front screen reflection values of a plurality of sequentially transmitted transmission radiation beams (24), in particular by forming a floating mean value of the front screen reflection radiation values of the sequentially transmitted transmission radiation beams (24).

9. An optical scanner in accordance with at least one of the preceding claims,
**characterised in that**
the evaluation unit is configured to combine front screen reflection radiation values which were determined over a plurality of scans and which belong to transmission radiation beams (24) irradiated in the same direction to form a front screen reflection value which is averaged over a plurality of scans and is associated with this direction.

10. An optical scanner in accordance with at least one of the preceding claims,
**characterised in that**
the regions of different contamination sensitivity (36, 38) of the front screen (14) are formed by hydrophilic and hydrophobic regions, by regions of different surface roughness or by regions of different optical refraction behaviour of the front screen (14).

11. An optical scanner in accordance with at least one of the preceding claims,
**characterised in that**
- the same reception path of the reception unit (12) is used for estimating a degree of contamination of the front screen (14) and for detecting an object present in the environment to be detected; or
- **in that** the reception unit (12) includes a first reception path which is configured for object detection and whose sensitivity is preferably adapted to an expected radiation quantity reflected by objects in the environment to be detected as well as a second reception path for estimating a degree of contamination of the front screen (14) whose sensitivity is adapted to an expected radiation quantity reflected by the front screen (14).

12. An optical scanner in accordance with at least one of the preceding claims,
**characterised in that**
the transmission unit includes two or more radiation sources for irradiating transmission radiation beams (24) which are arranged so that the transmission radiation beams of different radiation sources sweep over different tracks (56a, 56b) on the front screen (14) during a scan.

13. A method of estimating a degree of contamination of a front screen (14) of an optical scanner having a transmission unit, a reception unit (12) and a deflection unit (10), wherein the front screen (14) is arranged in the beam path between the deflection unit (10) and the environment to be detected,
- wherein transmission radiation beams (24) are transmitted by means of the transmission unit during a scan and are directed into a detection zone by means of the deflection unit (10) in different directions following one another in a scan direction (48);
- wherein radiation of transmission radiation beams (24) reflected from the detection zone is received by means of the reception unit (12);
- wherein a front screen (14) is used which has regions of high contamination sensitivity (36) and regions of low contamination sensitivity (38), with these regions (36, 38) being designed so that a contamination influence (40) on the front screen (14) in a region of high contamination sensitivity (36) effects an increase in the radiation quantity of a transmission radiation beam (24) reflected by the front screen (14) by a larger absolute amount than a contamination influence (40) in a region of low contamination sensitivity (38);
- wherein a front screen reflection value is determined for a transmission radiation beam (24), said value depending on the radiation quantity received by the reception unit (12) from the transmission radiation bundle (24) in a front screen time interval (44), with the front screen time interval (44) corresponding to the time interval in which a radiation of the transmission radiation beam (24) reflected by the front screen (14) is expected at the reception unit (12); and
- wherein at least one front screen reflection value which is associated with a transmission radiation beam (24) reflected by a region of high contamination sensitivity (36) is compared with at least one front screen reflection value which is associated with a transmission radiation bundle (24) of the front screen (14) reflected by a region of low contamination sensitivity (38) of the front screen (14) for estimating the degree of contamination of the front screen (14).

14. A method in accordance with claim 13,
**characterised in that**
front screen reflection values are detected and taught with a clean front screen (14); and **in that** the determined front screen reflection values are compared with the taught values in the estimation of the degree of contamination.

## Revendications

1. Scanner optique, en particulier scanner à laser suivant le principe du temps de parcours de la lumière, comprenant
- une unité émettrice pour émettre un faisceau de rayons émis (24) vers une zone de détection,
- une unité de déflexion (10) pour défléchir pendant un scannage les faisceaux de rayons émis (24) dans différentes directions mutuellement successives dans une direction de scannage (48) vers la zone de détection,
- une unité réceptrice (12) pour recevoir le rayonnement de faisceau de rayons émis (24) renvoyé depuis la zone de détection,
- une unité d'évaluation pour évaluer le rayonnement reçu par l'unité réceptrice (12), et
- une plaque frontale (14) transparente pour le faisceau de rayons émis (24) et agencée dans le trajet des rayons entre l'unité de déflexion (10) et l'environnement à détecter,
**caractérisé en ce que**
- la plaque frontale (14) présente des zones de forte sensibilité vis-à-vis des salissures (36) et des zones de faible sensibilité vis-à-vis des salissures (38), lesdites zones (36, 38) étant conçues de telle façon qu'une action des salissures (40) sur la plaque frontale (14) dans une zone de forte sensibilité vis-à-vis des salissures (36) entraîne une augmentation de la quantité des rayons d'un faisceau de rayons émis (24) renvoyé par la plaque frontale (14) d'une valeur absolue plus grande qu'une action des salissures (40) dans une zone de faible sensibilité vis-à-vis des salissures (38), et
- l'unité d'évaluation est réalisée pour déterminer une valeur de rayonnement renvoyé par la plaque frontale pour un faisceau de rayons émis (24), valeur qui dépend de la quantité de rayonnement reçue par l'unité réceptrice (12) depuis le faisceau de rayons émis (24) dans un intervalle temporel de plaque frontale (44), ledit intervalle temporel de plaque frontale (44) correspondant à l'intervalle temporel dans lequel un rayonnement du faisceau de rayons émis (24) renvoyé par la plaque frontale (44) est attendu au niveau de l'unité réceptrice (12) et, en vue d'estimer un degré de salissure de la plaque frontale (14), pour comparer au moins une valeur de rayonnement renvoyé par la plaque frontale qui est associée à un faisceau de rayons émis (24) renvoyé par une zone de forte sensibilité vis-à-vis des salissures (36) de la plaque frontale (14), avec au moins une valeur de rayonnement renvoyé par la plaque frontale qui est associée à un faisceau de rayons émis (24) renvoyé par une zone de faible sensibilité vis-à-vis des salissures (38) de la plaque frontale (14).

2. Scanner optique selon la revendication 1,
**caractérisé en ce que** l'unité d'évaluation est réalisée, en vue de déterminer la valeur de rayonnement renvoyé par la plaque frontale d'un faisceau de rayons émis (24), pour déterminer une valeur moyenne temporelle de la puissance du rayonnement reçu dans l'intervalle temporel (44) de plaque frontale.

3. Scanner optique selon l'une des revendications 1 ou 2,
**caractérisé en ce que** l'unité d'évaluation est réalisée pour estimer le degré de salissure de la plaque frontale (14) par une comparaison de valeurs déterminées du rayonnement renvoyé par la plaque frontale avec des valeurs apprises qui ont été déterminées pour une plaque frontale propre (14).

4. Scanner optique selon l'une au moins des revendications précédentes,
**caractérisé en ce que** des zones de forte sensibilité vis-à-vis des salissures (36) et des zones de faible sensibilité vis-à-vis des salissures (38) de la plaque frontale (14) alternent dans la direction de scannage (48), en particulier périodiquement.

5. Scanner optique selon la revendication 4,
**caractérisé en ce que** l'unité d'évaluation est réalisée pour engendrer, en utilisant plusieurs valeurs de rayonnement renvoyé par la plaque frontale qui ont été déterminées vers des directions différentes, un signal de plaque frontale (50, 52) dont l'évolution temporelle reproduit une évolution à résolution locale des valeurs de rayonnement renvoyé par la plaque frontale.

6. Scanner optique selon la revendication 5,
**caractérisé en ce que** l'unité d'évaluation est réalisée, en vue de comparer les valeurs de rayonnement renvoyé par la plaque frontale de faisceaux de rayons émis (21) qui sont renvoyés par des zones présentant différentes sensibilités vis-à-vis des salissures (36, 38), pour déterminer une part de signal dans le signal de plaque frontale (50, 52) à une fréquence prédéterminée qui correspond à une fréquence locale d'une succession régulière de zones de forte et de faible sensibilité vis-à-vis des salissures (36, 38) de la plaque frontale (14).

7. Scanner optique selon l'une au moins des revendications précédentes,
**caractérisé en ce que** les zones de forte et de faible sensibilité vis-à-vis des salissures (36, 38) de la plaque frontale (14) sont respectivement dimensionnées de telle façon que plusieurs faisceaux de rayons émis (24) qui sont émis à la suite les uns des autres tombent sur la même zone (36, 38).

8. Scanner optique selon l'une au moins des revendications précédentes,
**caractérisé en ce que** l'unité d'évaluation est réalisée pour déterminer, à partir des valeurs de rayonnement renvoyé par la plaque frontale de plusieurs faisceaux de rayons émis (24) qui sont émis à la suite les uns des autres, des valeurs moyennes locales du rayonnement renvoyé par la plaque frontale, en particulier en formant une valeur moyenne glissante des valeurs de rayonnement renvoyé par la plaque frontale des faisceaux de rayons émis (24) qui sont émis à la suite les uns des autres.

9. Scanner optique selon l'une au moins des revendications précédentes,
**caractérisé en ce que** l'unité d'évaluation est réalisée pour combiner des valeurs de rayonnement renvoyé par la plaque frontale qui sont déterminées sur plusieurs scannages et qui appartiennent à des faisceaux de rayons émis (24) envoyés dans la même direction, pour donner une valeur de rayonnement renvoyé par la plaque frontale moyennée sur plusieurs scannages, valeur qui est associée à cette direction.

10. Scanner optique selon l'une au moins des revendications précédentes,
**caractérisé en ce que** les zones présentant différentes sensibilités vis-à-vis des salissures (36, 38) de la plaque frontale (14) sont formées par des zones hydrophiles et des zones hydrophobes, par des zones présentant différentes rugosités de surface, ou par des zones de la plaque frontale présentant un comportement de réfraction optique différent.

11. Scanner optique selon l'une au moins des revendications précédentes,
**caractérisé**
- **en ce que** le même trajet de réception de l'unité réceptrice (12) est utilisé pour estimer un degré de salissure de la plaque frontale (14) et pour la détection d'un objet présent dans l'environnement à détecter, ou bien
- **en ce que** l'unité réceptrice (12) comprend un premier trajet de réception qui est réalisé pour la détection d'objets et dont la sensibilité est de préférence adaptée à une quantité attendue de rayonnement renvoyé par des objets dans l'environnement à détecter, ainsi qu'un second trajet de réception pour estimer un degré de salissure de la plaque frontale (14) et dont la sensibilité est adaptée à une quantité attendue de rayonnement renvoyé par la plaque frontale (14)

12. Scanner optique selon l'une au moins des revendications précédentes,
**caractérisé en ce que** l'unité émettrice comprend deux ou plusieurs sources de rayonnement pour envoyer des faisceaux de rayons émis (24), qui sont agencées de telle façon que les faisceaux de rayons émis (24) de différentes sources de rayonnement balayent pendant un scannage des traces différentes (56a, 56b) sur la plaque frontale.

13. Procédé pour estimer un degré de salissure d'une plaque frontale (14) d'un scanner optique comprenant une unité émettrice, une unité réceptrice (12) et une unité de déflexion (10), dans lequel la plaque frontale (14) est agencée dans le trajet des rayons entre l'unité de déflexion (10) et l'environnement à détecter,
- dans lequel, pendant un scannage, des faisceaux de rayons émis (24) sont émis au moyen de l'unité émettrice et sont défléchis au moyen de l'unité de déflexion (10) dans différentes directions mutuellement successives dans une direction de scannage (48), vers une zone de détection,
- dans lequel le rayonnement renvoyé par la zone de détection des faisceaux de rayons émis (24) est reçu au moyen de l'unité réceptrice (12),
- dans lequel on utilise une plaque frontale (14) qui comporte des zones de forte sensibilité vis-à-vis des salissures (36) et des zones de faible sensibilité vis-à-vis des salissures (38), lesdites zones (36, 38) étant conçues de telle façon qu'une action des salissures (40) sur la plaque frontale (14) dans une zone de forte sensibilité vis-à-vis des salissures (36) provoque une augmentation de la quantité de rayonnement renvoyé par la plaque frontale (14) d'un faisceau de rayons émis (24) d'une valeur absolue plus grande qu'une action des salissures (40) dans une zone de faible sensibilité vis-à-vis des salissures (38),
- dans lequel on détermine pour un faisceau de rayons émis (24) une valeur de rayonnement renvoyé par la plaque frontale, qui dépend de la quantité de rayonnement reçu par l'unité réceptrice (12) depuis le faisceau de rayons émis (24), dans un intervalle temporel de plaque frontale (44), dans lequel l'intervalle temporel de plaque frontale (44) correspond à l'intervalle temporel dans lequel un rayonnement du faisceau de rayons émis (24) renvoyé par la plaque frontale (14) est attendu au niveau de l'unité réceptrice (12), et
- dans lequel, pour estimer le degré de salissure de la plaque frontale (14), on compare au moins une valeur de rayonnement renvoyé par la plaque frontale, qui est associée à un faisceau de rayons émis (24) renvoyé par une zone de forte sensibilité vis-à-vis des salissures (36) de la plaque frontale (14), avec au moins une valeur de rayonnement renvoyé par la plaque frontale qui est associée à un faisceau de rayons émis (24) renvoyé par une zone de faible sensibilité vis-à-vis des salissures (38) de la plaque frontale (14).

14. Procédé selon la revendication 13,
**caractérisé en ce que**, pour une plaque frontale propre (14), on détecte des valeurs de rayonnement renvoyé par la plaque frontale et on les apprend, et **en ce que** lors de l'estimation du degré de salissure, on compare les valeurs déterminées du rayonnement renvoyé par la plaque frontale avec les valeurs apprises.
